# EUROPÄISCHE PATENTSCHRIFT

(11) **EP 2 435 785 B1**
(45) Veröffentlichungstag und Bekanntmachung des Hinweises auf die Patenterteilung: **14.09.2016**
(21) Anmeldenummer: 10712405.9
(22) Anmeldetag: 29.03.2010
(51) Int. Cl.: G01C 3/08, G01C 15/00, G01S 7/481, G01S 17/08, G02B 23/02, G02B 23/14

(54) **ZIELOPTIKVORRICHTUNG**
AIMING OPTICAL DEVICE
APPAREIL OPTIQUE DE VISÉE

(30) Priorität: 25.05.2009 DE 102009026435
(43) Veröffentlichungstag der Anmeldung: 04.04.2012
(73) Patentinhaber: Robert Bosch GmbH, 70442 Stuttgart (DE)
(72) Erfinder: SINNER-HETTENBACH, Martin, 71277 Rutesheim (DE); WOLF, Peter, 70771 Leinfelden-Echterdingen (DE); WOLST, Oliver, 72622 Nuertingen (DE); BABKINA, Tatiana, 72072 Tuebingen (DE)
(86) Internationale Anmeldenummer: PCT/EP2010/054070
(87) Internationale Veröffentlichungsnummer: WO 2010/136236

(56) Entgegenhaltungen:
- EP-A1- 1 519 147
- EP-A1- 1 580 526
- EP-A1- 1 662 278
- DE-B- 1 209 873
- DE-C- 659 208
- US-A- 5 095 326

## Beschreibung

### Stand der Technik

Die Erfindung geht aus von einer Zieloptikvorrichtung nach dem Oberbegriff des Anspruchs 1.

Es ist bereits eine Zieloptikvorrichtung für ein Messgerät mit einer Optikeinheit bekannt. Die Optikeinheit weist eine optische Umlenkeinheit und ein optisches Linsenelement auf.

Die EP 1 662 278 A1 offenbart eine optische Baugruppe zum Ein- und Ausspiegeln von Messstrahlen in einem Messgerät, bei der wenigstens ein Umlenkmittel mit der planen Fläche von wenigstens einer als Plankonvex- oder Plankonkavlinse ausgebildete Linse verbunden ist. Die Linse wird dabei als Linse und als Halterung für das Umlenkmittel verwendet. Linse und Umlenkmittel können dabei als einstückiges Bauteil gefertigt sein.

Die US 5,095,326 offenbart einen Bildsucher für eine Bildplatte

Aus der DE 1 209 873 ist ein photographische Sucher mit Einspiegelung eines Bildbegrenzungsrahmens und einer Instrurnentenzeigerstellung bekannt.

Aus der DE 659 208 ist ein 1:1 Prismenzielfernrohr für ein Gewehr bekannt.

### Offenbarung der Erfindung

Die Erfindung geht aus von einer Zieloptikvorrichtung für ein Entfernungsmessgerät, mit einer Optikeinheit, die zumindest eine optische Umlenkeinheit und ein erstes optisches Linsenelement aufweist

Die optische Umlenkeinheit und das erste optische Linsenelement sind zumindest teilweise einstückig miteinander ausgebildet.

In diesem Zusammenhang soll unter einer "Zieloptikvorrichtung" insbesondere eine Vorrichtung und/oder eine Einheit verstanden werden, die zu einer Ausrichtung des Entfernungsmessgeräts, bezüglich eines Messobjekts, wie beispielsweise einer Wand, vorgesehen ist und/oder die ein Anvisieren eines Messobjekts vor einem Messvorgang mittels des Entfernungsmessgeräts durch einen Bediener ermöglicht.

Des Weiteren soll unter einer "optischen Umlenkeinheit" insbesondere eine Einheit verstanden werden, die zu einer Umlenkung eines Licht- und/oder Laserstrahls und/oder eines ebensolchen Strahlenbündels vorgesehen ist, wobei die Umlenkung mittels Reflexion an Reflexionsflächen, wie beispielsweise Spiegelflächen und/oder Prismenflächen, und/oder durch Brechung der einfallenden Strahlen, wie beispielsweise mittels eines Prismas, erfolgen kann.

Der Lichtstrahl und/oder das Strahlenbündel können hierbei von einem Strahl und/oder einem Strahlenbündel eines Abbilds, wie beispielsweise eines Abbilds eines Messobjekts, gebildet sein. Eine Strahlrichtung eines auf die Umlenkeinheit einfallenden Strahls und/oder Strahlenbündels unterscheidet sich von einer Strahlrichtung eines die Umlenkeinheit verlassenden Strahls und/oder Strahlenbündels, wobei eine Orientierung einzelner Strahlen, insbesondere gleicher Wellenlänge, zueinander innerhalb des Strahlenbündels vor und nach der Umlenkung gleich ist.

Unter einem "optischen Linsenelement" soll insbesondere ein refraktives Element verstanden werden. Hierbei kann es sich um eine einzelne Linse oder aber auch eine Gruppe von Linsen handeln. Das optische Linsenelement weist hierzu zumindest eine, vorzugsweise zwei lichtbrechende Flächen auf, von denen zumindest eine als gekrümmte Fläche, insbesondere konkav oder konvex gekrümmte Fläche mit einer Brennweite ausgebildet ist, wobei mittels der gekrümmten Fläche die Strahlen insbesondere auf einen Punkt fokussiert werden können oder die Strahlen divergieren. Ein Gegenstand kann durch das optische Linsenelement vergrößert oder verkleinert oder gleich groß abgebildet werden.

Unter "einstückig" soll insbesondere aus einem einzigen Bauteil gebildet und/oder einteilig und/oder aus einem Guss hergestellt verstanden werden. Durch die erfindungsgemäße Ausgestaltung der Zieloptikvorrichtung kann eine besonders kompakte Zieloptikvorrichtung unter Einsparung von weiterem Bauraum, von weiteren Bauteilen und Kosten vorteilhaft erreicht werden. Zudem kann eine vorteilhafte Abstimmung zwischen der optischen Umlenkeinheit und dem optischen Linsenelement hinsichtlich einer Strahlführung bei einer Gestaltung und/oder einer Herstellung der Optikeinheit erzielt werden und anschließend die optische Umlenkeinheit zusammen mit dem ersten optischen Linsenelement als eine Baueinheit in einem Arbeitsschritt in das Entfernungsmessgerät insbesondere das Laserentfernungsmessgerät, vorjustiert montiert werden. Eine vorteilhafte Umlenkung und/oder Ablenkung eines einfallenden Strahls, insbesondere eines Licht- und/oder Laserstrahls, kann erreicht werden, wenn die optische Umlenkeinheit ein Prisma aufweist. Besonders vorteilhaft weist hierbei die optische Umlenkeinheit zumindest ein Pentaprisma auf, insbesondere ist das Prisma von dem Pentaprisma gebildet, wodurch eine kompakte Optikeinheit mit einer vorteilhaften Strahlführung erreicht werden kann, wobei insbesondere auf ein aufwendiges Justieren einzelner Komponenten, wie beispielsweise Spiegelflächen, zueinander zumindest teilweise verzichtet werden kann, indem diese einstückig mit dem Pentaprisma ausgebildet sind.

Es wird ferner vorgeschlagen, dass die optische Umlenkeinheit zumindest teilweise von einem optischen Spritzgussbauteil gebildet ist. Hierbei soll unter einem "optischen Spritzgussbauteil" insbesondere ein lichtleitendes, zumindest teilweise transparentes Spritzgussbauteil verstanden werden, das besonders vorteilhaft zumindest teilweise aus einem Material mit einem transparenten und unpolaren Thermoplasten, wie beispielsweise von dem Cyclo-Olefin-Polymer Zeonex, gebildet ist. Alternativ hierzu kann das optische Spritzgussbauteil auch ein transparentes Polycarbonat und/oder einen thermoplastischen Kunststoff, wie insbesondere ein Polymethylmethacrylat und/oder weitere, dem Fachmann als sinnvoll erscheinende transparente Materialien umfassen.

Das optische Linsenelement ist in dem optischen Spritzgussbauteil
integriert und einstückig bzw. zumindest teilweise einstückig mit diesem ausgebildet, so dass eine kompakte optische Baueinheit erreicht werden kann, die zudem konstruktiv einfach in das Entfernungsmessgerät integriert werden kann. Teilweise einstückig bedeutet in diesem Zusammenhang, dass zumindest ein Element eines mehrteiligen optischen Linsenelements einstückig mit bzw. in dem optischen Spritzgussbauteil integriert ist. Weiterhin kann erreicht werden, dass das optische Linsenelement und/oder weitere, in der optischen Umlenkeinheit integrierte optische Elemente lediglich einmal bei der Herstellung des optischen Spritzgussbauteils zueinander festgelegt und/oder justiert werden müssen und ein nachträgliches und insbesondere unerwünschtes Verschieben eines Bauteils und/oder eines Elements aus einer justierten Position heraus vorteilhaft verhindert werden kann. Es kann zudem ein besonders leichtes und insbesondere kostengünstiges Entfernungsmessgerät realisiert werden und damit eine hohe Bedienerfreundlichkeit erreicht werden.

Weiterhin wird vorgeschlagen, dass das erste optische Linsenelement zumindest teilweise von einer Sammellinse gebildet ist. Vorzugsweise weist die Sammellinse zumindest teilweise eine Funktion eines Objektivs der Optikeinheit auf. Es kann durch diese Ausgestaltung der Erfindung das Objektiv der Optikeinheit Platz sparend und insbesondere fix justiert innerhalb der Optikeinheit bezüglich weiterer optischer Elemente der Optikeinheit, wie beispielsweise der optischen Umlenkeinheit, angeordnet werden. Des Weiteren ist es grundsätzlich denkbar, dass das erste optische Linsenelement von einer Zerstreuungslinse und/oder einem optischen Linsensystem gebildet ist.

Erfindungsgemäß weist die Optikeinheit zumindest einen Hohlspiegel auf bzw. wirkt als ein solcher, wobei dieser von dem ersten optischen Linsenelement gebildet ist. Besonders vorteilhaft ist hierbei das optische Linsenelement von einer Sammellinse gebildet, deren Innenseite bzw. deren zum Mittelpunkt des Prismas weisende Seite zumindest teilweise die Funktion eines Hohlspiegels aufweist. Es kann hierbei eine vorteilhafte Funktionskombination unter Einsparung weiterer Bauteile, Bauraum, Montagezeit und Kosten vorteilhaft erreicht werden. Insbesondere kann hierbei während einer Messung der Lichtstrahl und/oder der Laserstrahl teilweise an dem als Hohlspiegel dienenden Element reflektiert werden und somit als Zielmarkierung in Richtung des Bedieners und/oder einem Auge des Bedieners gelenkt werden, während mittels des restlichen Teilstrahls eine Entfernungsmessung vorgenommen werden kann.

In einer vorteilhaften Weiterbildung der Erfindung wird vorgeschlagen, dass die Optikeinheit zumindest ein zweites optisches Linsenelement aufweist, das einstückig oder zumindest teilweise einstückig mit der optischen Umlenkeinheit ausgebildet ist. Es kann eine besonders kompakte Optikeinheit realisiert werden, die vorab gefertigt sein kann und die vorzugsweise als eine optische Baueinheit während einer Montage und/oder Herstellung des Entfernungsmessgeräts, insbesondere des Laserentfernungsmessgeräts, unter Einsparung weiterer Montageschritte eingebaut werden kann. Zudem können hierbei beide optische Linsenelemente vorteilhaft aufeinander abgestimmt sein, wobei beide optische Linsenelemente insbesondere einstückig mit dem optischen Spritzgussbauteil ausgebildet sind. Vorzugsweise ist eine optische Hauptebene des zweiten optischen Linsenelements im Wesentlichen senkrecht zu einer optischen Hauptebene des ersten optischen Linsenelements angeordnet.

Besonders vorteilhaft ist das zweite optische Linsenelement zumindest teilweise von einer Zerstreuungslinse gebildet. Vorzugsweise weist die Zerstreuungslinse zumindest teilweise die Funktion eines Okulars der Optikeinheit auf.

Es kann durch diese Ausgestaltung der Erfindung eine Abbildung eines Messobjekts nach einem Prinzip eines Galilei-Fernrohrs realisiert werden, welches vorzugsweise ein aufrechtes und insbesondere vergrößertes Bild des Messobjekts anzeigt, so dass eine gute Ablesbarkeit und/oder Orientierung eines anvisierten Messpunkts für den Bediener erreicht werden kann. Grundsätzlich ist es jedoch denkbar, dass das zweite optische Linsenelement von einer Sammellinse und/oder einem optischen Linsensystem gebildet ist. Vorzugsweise sind das erste optische Linsenelement und das zweite optische Linsenelement derart zueinander eingestellt und/oder angeordnet, dass im Auge eines Bedieners, insbesondere auf dessen Netzhaut, ein scharfes Bild entsteht, das besonders vorteilhaft unabhängig von einem Abstand des Auges zu einem der optischen Linsenelemente, insbesondere des zweiten optischen Linsenelements, ist.

In einer alternativen Ausgestaltung der Erfindung wird vorgeschlagen, dass die Optikeinheit zumindest eine Beschichtung aufweist, die an oder in zumindest einer Oberfläche der optischen Umlenkeinheit angeordnet ist. Hierbei soll unter einer "Beschichtung" insbesondere eine auf oder in einer Oberfläche der optischen Umlenkeinheit aufgebrachte Schicht verstanden werden, wobei Materialeigenschaften der aufgebrachten Schicht vorzugsweise unterschiedlich zu Materialeigenschaften der optischen Umlenkeinheit ausgebildet sind. Die Beschichtung ist vorzugsweise auf eine Funktion der Oberfläche innerhalb der optischen Umlenkeinheit ausgerichtet, wie beispielsweise eine zumindest teilweise dielektrische Beschichtung für eine als spiegelnde oder reflektierende Fläche ausgebildete Oberfläche. Zudem kann die Beschichtung zumindest teilweise aus weiteren, insbesondere metallischen Materialien, wie beispielsweise aus einem Silbermaterial, gebildet sein.

Durch diese Ausgestaltung der Erfindung und insbesondere mittels einer dielektrischen Beschichtung kann vorteilhaft eine optische Eigenschaft der Oberfläche der optischen Umlenkeinheit verändert werden, insbesondere kann hierbei ein Brechungsindex der Beschichtung unterschiedlich zu einem Brechungsindex der optischen Umlenkeinheit ausgebildet sein und/oder es kann eine Filtereigenschaft durch die Beschichtung für auf die optische Umlenkeinheit einfallende oder austretende Lichtstrahlen verändert werden. Zudem können die unterschiedlichen Oberflächen der optischen Umlenkeinheit mit unterschiedlichen Beschichtungen versehen sein, wie beispielsweise eine spiegelnde Beschichtung zur Erzeugung von spiegelnden Flächen bzw. von Spiegelflächen, eine dielektrische Beschichtung für eine Teilreflexion des Lichtstrahls, insbesondere des Laserstrahls, an der beschichteten Fläche usw. Die einzelnen beschichteten Oberflächen können sich zudem in einer Schichtdicke der Beschichtung unterscheiden, so dass bei einem gleichen Beschichtungsmaterial unterschiedliche optische Eigenschaften erzeugt werden können, wie beispielsweise unterschiedliche Transmissionseigenschaften für eine Licht- und/oder Laserstrahlung. Zudem kann eine dielektrische Beschichtung quantitativ mit einer hohen Prozesszuverlässigkeit auf die zu beschichtende Fläche aufgebracht werden.

Ferner wird vorgeschlagen, dass eine Beschichtung zumindest teilweise eine spiegelnde Fläche der optischen Umlenkeinheit bildet, wodurch unter Einsparung weiterer Bauteile, Bauraum und Kosten die Zieloptikvorrichtung konstruktiv einfach realisiert werden kann. Insbesondere kann hierbei eine vorteilhafte Abstimmung der spiegelnden Fläche mit weiteren Bauteilen und/oder Elementen der optischen Umlenkeinheit, wie insbesondere weiterer spiegelnden Flächen, und/oder des ersten und/oder des zweiten optischen Linsenelements erreicht werden und ein nachträgliches Justieren kann vorteilhaft verhindert und eingespart werden.

Es wird vorgeschlagen, dass zumindest zwei spiegelnde Flächen der optischen Umlenkeinheit einen Winkel von im Wesentlichen 45° zueinander einschließen, auch wenn diese Flächen keinen gemeinsamen Scheitelpunkt bzw. keine gemeinsame Scheitellinie aufweisen. Es kann hierbei eine vorteilhafte Strahlführung des Lichtstrahls und/oder des Laserstrahls von dem als Sammellinse ausgebildeten Objektiv auf das als Zerstreuungslinse ausgebildeten und im Wesentlichen senkrecht zu dem Objektiv ausgerichteten Okular erreicht werden. Insbesondere kann hierbei eine Zieloptikvorrichtung nach dem Galilei-Prinzip mit einem vergrößerten und insbesondere aufrechten Bild erreicht werden.

Besonders vorteilhaft weist das als Sammellinse ausgebildete optische Linsenelement an einer Oberfläche eine zumindest teilweise spiegelnde und/oder reflektierende Beschichtung auf und/oder es kann eine Transmissionseigenschaft einer Linsenoberfläche mittels der Beschichtung herabgesetzt werden, so dass die Sammellinse zusammen mit der Beschichtung zumindest teilweise die Funktion eines Hohlspiegels für Licht- und/oder Laserstrahlung aufweist, die aus einer Richtung ausgehend von einem Mittelpunkt der optischen Umlenkeinheit auf die Sammellinse treffen. Eine Reflexion von Licht- und/oder Laserstrahlen an dem Hohlspiegelelement kann dabei abhängig von einem Auftreffwinkel der auf die Innenfläche der Sammellinse fallenden Licht- und/oder Laserstrahlen sein und/oder von deren Wellenlänge abhängig sein.

In einer vorteilhaften Weiterbildung der Erfindung wird vorgeschlagen, dass die Zieloptikvorrichtung zumindest ein weiteres optisches Element, insbesondere ein als Spritzgussbauteil ausgebildetes Element aufweist, das zu einem Einkoppeln von Licht- und/oder Laserstrahlen in die Umlenkeinheit vorgesehen ist. Vorzugsweise ist das weitere optische Element aus einem gleichen Material wie zumindest teilweise ein Material der Umlenkeinheit, insbesondere des ersten optischen Spritzgussbauteils, gebildet. In diesem Zusammenhang soll unter einem "Einkoppeln von Licht" insbesondere verstanden werden, dass durch das weitere optische Spritzgussbauteil eine Strahlung, insbesondere eine Licht- und/oder Laserstrahlung, zum Ausleuchten in das erste optische Spritzgussbauteil eingebracht werden kann, so dass eine vorteilhafte Sicht für einen Bediener gegeben ist. Vorzugsweise wird durch die eingekoppelte Lichtstrahlung zudem eine Referenzmarke zu einem Anvisieren eines Messobjekts gebildet.

Ferner wird vorgeschlagen, dass zwischen der Umlenkeinheit und dem weiteren optischen Element zumindest teilweise eine Transmissions-Reflexionsschicht angeordnet ist. Hierbei soll unter einer "Transmissions-Reflexionsschicht" insbesondere eine Schicht verstanden werden, die entlang einer Richtung für auf die Schicht auftreffende Licht- und/oder Laserstrahlung eine reflektierende Wirkung aufweist und entlang einer vorzugsweise entgegengesetzten Richtung für auf die Schicht auftreffende Licht- und/oder Laserstrahlung eine Transmissionswirkung aufweist. Vorzugsweise ist die Transmissions-Reflexionsschicht aus einem dielektrischen Material gebildet und an einem Grenzübergang zwischen der Umlenkeinheit und dem weiteren optischen Element angeordnet, wobei die Umlenkeinheit und das weitere optische Element insbesondere direkt aneinander anschließend angeordnet sind. Grundsätzlich ist es auch denkbar, dass die Transmissions-Reflexionsschicht von einem Kleber gebildet ist, mit dem die Umlenkeinheit und das weitere optische Element miteinander verklebt sind. Es kann hierbei eine vorteilhafte Funktionskombination erreicht werden, indem ein Übergang zwischen der Umlenkeinheit und dem weiteren optischen Spritzgussbauteil für in die Umlenkeinheit einkoppelnde Strahlung im Wesentlichen transparent ist und für Strahlung, die von einem Inneren der Umlenkeinheit auf die Transmissions-Reflexionsschicht trifft, im Wesentlichen undurchlässig bzw. reflektierend ist.

Insbesondere weist das weitere optische Element eine Fläche auf, die parallel zu einer Fläche des Umlenkelements und/oder des ersten Linsenelements ist.

Es wird weiterhin vorgeschlagen, dass die Zieloptikvorrichtung zumindest eine Strahlungsquelle zur Erzeugung von Strahlung aufweist, die zur Entfernungsmessung und zum Anvisieren eines Messobjekts vorgesehen ist, wodurch vorteilhaft weitere Bauteile, Bauraum, Montageaufwand und Kosten vorteilhaft eingespart werden können. Die Strahlungsquelle kann hierbei von einer Laserstrahlungsquelle und/oder einer Lichtstrahlungsquelle gebildet sein, wie beispielsweise eine LED, wobei die Strahlungsquelle insbesondere zu einem Aussenden von sichtbarer Strahlung vorgesehen ist. Vorzugsweise wird hierbei die in die Umlenkeinheit eingekoppelte Strahlung zumindest teilweise für einen Messbetrieb verwendet und die restliche Strahlung für ein Anvisieren der Messobjekts, wobei die restliche Strahlung insbesondere einen sichtbaren Strahlungsspot, wie beispielsweise einen sichtbaren Laserspot bildet.

Des Weiteren geht die Erfindung aus von einem Entfernungsmessgerät, insbesondere einem Laserentfernungsmessgerät, mit zumindest einer Zieloptikvorrichtung. Es kann hierbei eine besonders Platz sparende und insbesondere kompakte Ausgestaltung des Laserentfernungsmessgeräts erreicht werden und damit eine Bedienerfreundlichkeit des Laserentfernungsmessgeräts erhöht werden. Ferner geht die Erfindung aus von einem Montageverfahren für ein Entfernungsmessgerät mit einer Zieloptikvorrichtung, wobei in einem ersten Schritt eine optische Umlenkeinheit zusammen mit einem ersten Linsenelement als einstückige Baueinheit hergestellt wird und anschließend die Baueinheit in die Zieloptikvorrichtung des Entfernungsmessgeräts montiert wird.

In einer Ausführung des erfindungsgemäßen Herstellungsverfahrens wird in einem zweiten Schritt die Umlenkeinheit mit einem oder mehreren weiteren optischen Elementen, insbesondere einem der Einkopplung in die Umlenkeinheit dienenden Spritzgussbauteil und/oder eine Lichtquelle, insbesondere einer Laserlichtquelle und/oder eine Justiereinrichtung zu einer Baueinheit montiert und anschließend diese Baueinheit in die Zieloptikvorrichtung des Entfernungsmessgeräts montiert.

Es kann hierbei eine konstruktiv einfache Montage des Entfernungsmessgeräts unter Einsparung von Herstellungszeiten und Kosten vorteilhaft erreicht werden. Zudem kann eine besonders vorteilhafte und einfache Justierung der Zieloptikvorrichtung vor einer Montage des Entfernungsmessgeräts erreicht werden. Hierbei soll unter "einer Baueinheit" insbesondere eine einzelne Baueinheit verstanden werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Entfernungsmessgerät mit einer Zieloptikvorrichtung in einer schematischen Darstellung,
- Fig. 2: die Zieloptikvorrichtung zusammen mit einer separat zur Zieloptikvorrichtung ausgebildeten Strahlungsquelle für eine Entfernungsmessung in einer schematischen Darstellung,
- Fig. 3: die Zieloptikvorrichtung in einer Detailansicht und
- Fig. 4: eine alternative Ausgestaltung der Zieloptikvorrichtung in einer Detailansicht.

### Beschreibung der Ausführungsbeispiele

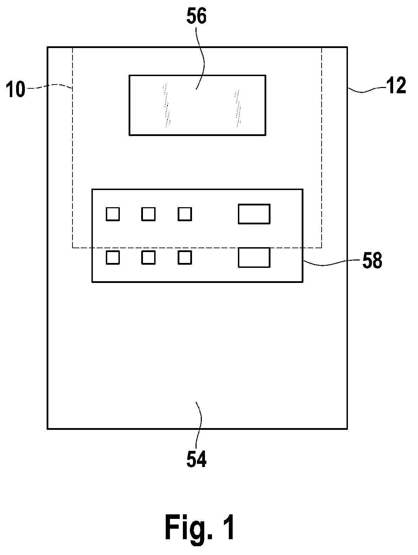

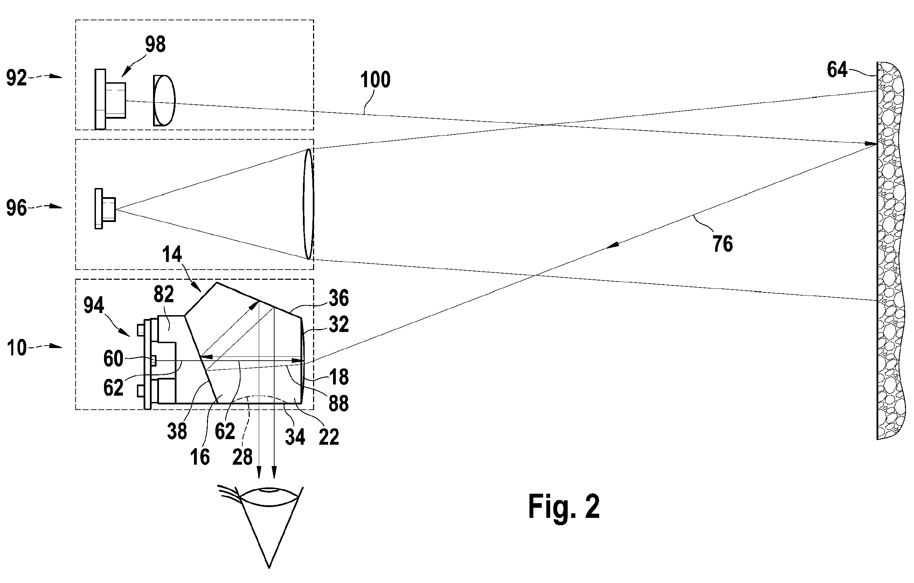

In Figur 1 ist Entfernungsmessgerät 12 dargestellt, das eine Zieloptikvorrichtung 10 aufweist, die von einem Gehäuse 54 des Entfernungsmessgeräts 12 umgeben ist. Das Entfernungsmessgerät 12 ist hierbei von einem Laserentfernungsmessgerät gebildet. Des Weiteren weist das Laserentfernungsmessgerät eine Anzeigeneinheit 56, die zu einer Ausgabe eines Messergebnisses im Betrieb des Laserentfernungsmessgeräts vorgesehen ist, und eine Eingabeeinheit 58 mit mehreren Eingabetasten auf, die zu einer Bedienung des Laserentfernungsmessgeräts durch einen Bediener vorgesehen ist. In Figur 2 ist schematisch ein Aufbau des Laserentfernungsmessgeräts mit einer Sendeeinheit 92, einer Detektionseinheit 96 und einer Zieloptikvorrichtung 10 dargestellt. Die Sendeeinheit 92 weist eine erste Strahlungsquelle 98 auf, die von einer Laserstrahlungsquelle gebildet ist, wie beispielsweise einer Laserdiode, die zu einem Generieren eines Laserstrahls 100 für einen Messbetrieb vorgesehen ist (Figur 2). In dem Messbetrieb wird der Laserstrahl 100 auf ein anvisiertes Messobjekt 64, beispielsweise eine Wandoberfläche, gerichtet und anhand eines von dem Messobjekt 64 reflektierten und von dem Laserentfernungsmessgerät mittels der Detektionseinheit 96 empfangenen Strahls eine Entfernung zwischen dem Laserentfernungsmessgerät und dem Messobjekt 64 ermittelt.

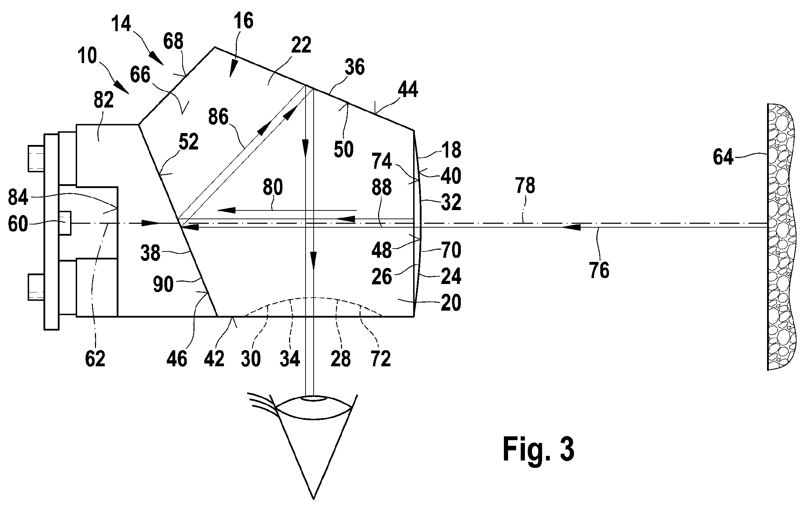

Die Zieloptikvorrichtung 10 des Laserentfernungsmessgeräts 12 ist in den Figuren 2 und 3 näher dargestellt. Die Zieloptikvorrichtung 10 umfasst eine Optikeinheit 14, die eine optische Umlenkeinheit 16 und ein erstes optisches Linsenelement 18 aufweist, wobei die optische Umlenkeinheit 16 dabei einstückig mit dem ersten optischen Linsenelement 18 ausgebildet ist. Des Weiteren weist die Optikeinheit 14 ein zweites optisches Linsenelement 28 auf, das ebenfalls einstückig mit der optischen Umlenkeinheit 16 ausgebildet ist (Figur 3). Grundsätzlich ist es jedoch denkbar, dass das zweite optische Linsenelement 28 separat zu der optischen Umlenkeinheit 16 ausgebildet ist oder aus mehreren Linsen besteht, von denen eine Untermenge separat zu der optischen Umlenkeinheit 16 ausgebildet ist. Analoges gilt auch für das erste optische Linsenelement 18.

Die optische Umlenkeinheit 16 ist zusammen mit dem ersten optischen Linsenelement 18 und dem zweiten optischen Linsenelement 28 von einem optischen Spritzgussbauteil 22 gebildet, das vorzugsweise aus einem Material mit einem transparenten und unpolaren Thermoplasten, wie beispielsweise von dem Cyclo-Olefin-Polymer Zeonex, gebildet ist. Alternativ ist es jedoch denkbar, dass das erste optische Linsenelement 18 und/oder das zweite optische Linsenelement 28 zumindest teilweise aus einem zu dem Material der optischen Umlenkeinheit 16, insbesondere des optischen Spritzgussbauteils 22, unterschiedlichen Material gebildet ist und das erste optische Linsenelement 18 und/oder das zweite optische Linsenelement 28 in die optische Umlenkeinheit 16, insbesondere das optische Spritzgussbauteil 22, durch zumindest teilweises Umspritzen integriert sind/ist.

Die optische Umlenkeinheit 16 umfasst ein von einem Pentaprisma 20 gebildetes Prisma, wobei das Pentaprisma 20 eine fünfeckige und/oder fünfseitige Querschnittsfläche 66 aufweist. Das Pentaprisma 20 umfasst eine erste Oberfläche 40 und eine zweite Oberfläche 42, die direkt benachbart und/oder direkt nebeneinander angeordnet sind. Die erste und die zweite Oberfläche 40, 42 sind im Wesentlichen senkrecht zueinander angeordnet. Das Pentaprisma 20 weist zudem eine dritte Oberfläche 44 auf, die ebenfalls direkt an die erste Oberfläche 40 angrenzt, wobei die erste und die dritte Oberfläche 40, 44 einen Winkel von größer 90° zueinander einschließen. Eine vierte Oberfläche 46 des Pentaprismas 20 grenzt direkt an die zweite Oberfläche 42 an, wobei die zweite und die vierte Oberfläche 42, 46 einen Winkel von größer 90° zueinander einschließen. Die dritte und die vierte Oberfläche 44, 46 bilden zudem einen Winkel zueinander von im Wesentlichen 45°. Zwischen der dritten und der vierten Oberfläche 44, 46 ist eine fünfte Oberfläche 68 des Pentaprismas 20 angeordnet.

Das erste optische Linsenelement 18 und das zweite optische Linsenelement 28 sind jeweils an einer Oberfläche 40, 42 der optischen Umlenkeinheit 16, insbesondere des Pentaprismas 20, angeordnet, wobei das erste optische Linsenelement 18 an der ersten Oberfläche 40 und das zweite optische Linsenelement 28 an der zweiten Oberfläche 42 des Pentaprismas 20 angeordnet ist. Das erste optische Linsenelement 18 ist von einer Sammellinse 24 gebildet, die als Objektiv 70 der Optikeinheit 14 ausgebildet ist, wobei eine konvexe Wölbung der Sammellinse 24 an einer Außenfläche der optischen Umlenkeinheit 16, insbesondere des Pentaprismas 20, angeordnet ist. Das zweite optische Linsenelement 28 ist von einer Zerstreuungslinse 30 gebildet, die als Okular 72 der Optikeinheit 14 ausgebildet ist. Die Sammellinse 24 und die Zerstreuungslinse 30 sind somit im Wesentlichen senkrecht zueinander angeordnet. Die Zerstreuungslinse 30 weist eine konkave Wölbung auf, die ebenfalls an einer Außenfläche der optischen Umlenkeinheit 16, insbesondere des Pentaprismas 20, angeordnet ist.

Des Weiteren weist die Optikeinheit 14 mehrere Beschichtungen 32, 34, 36, 38 auf, die an den unterschiedlichen Oberflächen 40, 42, 44, 46 der Umlenkeinheit 16 angeordnet sind. Auf einen die konvexe Wölbung umfassenden Teilbereich der ersten Oberfläche 40 ist eine zumindest teilweise spiegelnde und/oder reflektierende Beschichtung 32 aufgetragen, die für Licht- und/oder Laserstrahlen 62, die aus einem Inneren der optischen Umlenkeinheit 16 auf eine Innenseite 74 einer Linsenfläche der Sammellinse 24 und/oder auf die Beschichtung 32 treffen, eine spiegelnde und/oder reflektierende Wirkung und/oder eine zumindest transmissionsmindernde Wirkung aufweist. Die Sammellinse 24 wirkt somit als ein Hohlspiegel 26 mit einer spiegelnden Fläche 48 für auf die Innenseite treffende Licht- und/oder Laserstrahlen 62, während die Beschichtung 32 für Strahlung, die von außen auf die konvexe Wölbung auftrifft, im Wesentlichen durchlässig ist. Die Beschichtung 32 ist auf eine Wellenlänge des Laserstrahls 62 abgestimmt, so dass eine Transmission des Laserstrahls 62 an dem Hohlspiegel 26 vermindert wird und zumindest eine Teilreflexion des Laserstrahls 62 an dem Hohlspiegel 26 erfolgt. Die Beschichtung 32 ist hierbei von einer dielektrischen Beschichtung gebildet. In einer alternativen Ausgestaltung der Zieloptikvorrichtung 10 ist es zudem denkbar, auf eine Beschichtung 32, 34, 36, 38 der Oberflächen 40, 42, 44, 46 der Umlenkeinheit 16 zu verzichten.

Eine spiegelnde und/oder reflektierende Beschichtung 36, 38 ist ebenfalls auf der dritten Oberfläche 44 und der vierten Oberfläche 46 aufgetragen, so dass an den beiden Oberflächen 44, 46 ebenfalls Licht- und/oder Laserstrahlen 62, die vom Innern der optischen Umlenkeinheit 16 auf die Beschichtung 36, 38 treffen, reflektiert und/oder gespiegelt werden. Die dritte und vierte Oberfläche 44, 46 ist jeweils als spiegelnde Fläche 50, 52 ausgebildet, wobei die beiden spiegelnden Flächen 50, 52 einen Winkel von im Wesentlichen 45° zueinander einschließen. Die beiden spiegelnden Flächen 50, 52 sind hierbei als Flachspiegel ausgebildet. Die spiegelnde und/oder reflektierende Beschichtung 36, 38 ist hierbei auf eine Wellenlänge des durch die Umlenkeinheit 16 verlaufenden Licht- und/oder Laserstrahls 62 abgestimmt, so dass eine spiegelnde und/oder reflektierende Eigenschaft der Beschichtung hauptsächlich für diese Strahlung erfolgt. Zudem weist zumindest die spiegelnde Fläche 52 für Strahlung, insbesondere Laserstrahlung, die von außerhalb der optischen Umlenkeinheit 16 auf die Beschichtung 38 auftrifft, eine Transmissionseigenschaft auf, so dass diese Strahlung in die optische Umlenkeinheit 16 eingekoppelt werden kann und die Beschichtung 38 für diese Strahlung zumindest teildurchlässig ist. Die Beschichtung 36, 38 ist beispielsweise zumindest teilweise von einer dielektrischen Beschichtung gebildet, die zumindest an der vierten Oberfläche 46 zumindest teilweise von einer Transmissions-Reflexionsschicht 90 gebildet ist.

Die zweite Oberfläche 42 der optischen Umlenkeinheit 16 weist ebenfalls eine Beschichtung 34 auf, die von einer Antireflexbeschichtung gebildet ist, so dass eine unerwünschte Reflexion von Licht- und/oder Laserstrahlung an der Zerstreuungslinse 30 vorteilhaft verhindert wird und eine störungsreduzierte oder störungsfreie Sicht mittels des Okulars 72 für den Bediener erreicht wird.

Das erste optische Linsenelement 18 und das zweite optische Linsenelement 28 sind bezüglich den beiden als spiegelnde Flächen 50, 52 bzw. als Flachspiegel ausgebildeten Oberflächen 44, 46 derart angeordnet, dass Strahlung, die im Wesentlichen senkrecht auf eine optische Hauptebene des ersten optischen Linsenelements 18 auftrifft oder abstrahlt, von der vierten Oberfläche 46 gespiegelt und/oder reflektiert wird oder auf diese auftrifft und dass Strahlung, die im Wesentlichen senkrecht auf eine optische Hauptebene des zweiten optischen Linsenelements 28 auftrifft oder abstrahlt, von der dritten Oberfläche 44 gespiegelt und/oder reflektiert wird oder auf diese auftrifft.

Die einstückig mit dem ersten und dem zweiten optischen Linsenelement 18, 28 ausgebildete Umlenkeinheit 16 ist derart innerhalb der Zieloptikvorrichtung 10 angeordnet, dass Strahlen, die von außen, insbesondere von dem Messobjekt 64 ausgehende Strahlen 76, auf das Objektiv 70 treffen. Entlang einer Achse 78, die im Wesentlichen senkrecht zur ersten Oberfläche 40 des Pentaprismas 20 ausgerichtet ist, von der Sammellinse 24 in eine Richtung 80 der vierten Oberfläche 46 der optischen Umlenkeinheit 16 ist nach der vierten Oberfläche 46 ein weiteres optisches Element 82 angeordnet und nach diesem eine von einer Laserdiode gebildete Strahlungsquelle 60. Das weitere optische Element 82 ist zu einem Einkoppeln des von der Strahlungsquelle 60 ausgesandten Laserstrahls 62 in die optische Umlenkeinheit 16 vorgesehen. Zudem ist das weitere optische Element 82 aus dem gleichen Material gebildet wie das Pentaprisma 20, so dass eine Brechung des von der Strahlungsquelle 60 ausgesandten Laserstrahls 62 entlang der Achse 78 von dem weiteren optischen Element 82 zu dem Pentaprisma 20 aufgrund gleicher optischer Medien verhindert ist.

Entlang der Achse 78 ist zwischen der vierten Oberfläche 46 der Umlenkeinheit 16 und dem weiteren optischen Element 82 eine Transmissions-Reflektionsschicht 90 angeordnet, so dass der von der Strahlungsquelle 60 ausgesandte Laserstrahl 62 in die Umlenkeinheit 16 im Betrieb eingekoppelt wird, jedoch ein Austritt von Strahlung aus der Umlenkeinheit 16 heraus über die vierte Oberfläche 46 verhindert ist. Alternativ hierzu kann die Transmissions-Reflektionsschicht 90 auch an dem weiteren optischen Element 82 angeordnet sein und/oder von einem Kleber, mit dem die Umlenkeinheit 16 und das weitere optische Element 82 verklebt sind, gebildet sein. Des Weiteren ist eine Ausgestaltung des weiteren optischen Elements 82 mit einem zu dem Pentaprisma 20 unterschiedlichen Material jederzeit denkbar, wobei zum Erreichen einer effektiven Einkopplung des Laserstrahls 62 in das Pentaprisma 20 zwei aneinandergrenzenden Flächen des weiteren optischen Elements 82 und des Pentaprismas 20 einen Winkel von größer 0° einschließen können und/oder hierzu ein Einstrahlwinkel des Laserstrahls 62 in das weitere optische Element 82 und/oder in das Pentaprisma 20 variiert werden kann.

Der von der Strahlungsquelle 60 generierte Laserstrahl 62 wird im Betrieb des Laserentfernungsmessgeräts von der Strahlungsquelle 60 entlang der Achse 78 in Richtung der optischen Umlenkeinheit 16 ausgestrahlt und trifft zunächst auf eine der Strahlungsquelle 60 zugewandten Oberfläche 84 des weiteren optischen Elements 82. Ein Einfallswinkel einer optischen Achse des Laserstrahls 62 auf die Oberfläche 84 des weiteren optischen Elements 82 beträgt nahezu 90°, so dass der Laserstrahl 62 an der Oberfläche 84 keine Brechung und/oder Richtungsänderung erfährt und eine Reflexion des Laserstrahls 62 nahezu verhindert und/oder minimiert wird.

In das weitere optische Element 82, welches der Einkopplung in die Umlenkeinheit 16 dient, kann auch, insbesondere einstückig, ein weiteres Linsenelement eingearbeitet sein, um beispielsweise eine Stahlanpassung des Strahls 62 vorzunehmen.
In einer alternativen Ausgestaltung der Erfindung ist es zudem denkbar, dass mittels des von der Strahlungsquelle 60 erzeugten Laserstrahls 62 eine Ausstrahlung der gesamten Optikeinheit 14 nur ungenügend erfolgt, so dass zwischen der Strahlungsquelle 60 und dem weiteren optischen Element 82 ein weiteres optisches Linsenelement, das insbesondere von einer Zerstreuungslinse gebildet ist, angeordnet ist, die zur Ausleuchtung der gesamten Optikeinheit 14 vorgesehen ist.

Der Laserstrahl 62 wird innerhalb des weiteren optischen Elements 82, welches insbesondere als Spritzgussteil ausgebildet sein kann, in Richtung der optischen Umlenkeinheit 16 geleitet. Aufgrund der Tatsache, dass die optische Umlenkeinheit 16 von dem optischen Spritzgussbauteil 22 gebildet ist und die Beschichtung 36 an der Oberfläche 46 für die Laserstrahlen 62 durchlässig ist, erfährt der Laserstrahl 62 an dem Übergang zwischen dem optischen Spritzgussbauteil 22 und dem weiteren optischen Element 82 keine Ablenkung. Der Laserstrahl 62 verläuft innerhalb der Umlenkeinheit 16 entlang der Achse 78 in Richtung der Sammellinse 24 und wird durch die Beschichtung 32 auf der ersten Oberfläche 40 teilweise in Richtung der vierten Oberfläche 46 der optischen Umlenkeinheit 16 entlang der Achse 78 reflektiert. Dieser reflektierte Laserstrahl 62 wird als Zielmarkierung 86 und/oder Referenzmarkierung zum Anvisieren des Messobjekts 64 verwendet, wobei die Zielmarkierung 86 als sichtbarer, beispielsweise roter Punkt und/oder Fleck für den Bediener erkennbar ist. Diese Zielmarkierung 86 wird zusammen mit einem Abbildungsstrahl 88 eines anvisierten Punkts des Messobjekts 64, entlang der Achse 78 in Richtung der vierten Oberfläche 46, die von der spiegelnden Fläche 52 gebildet ist, geleitet, wobei der Abbildungsstrahl 88 durch die Sammellinse 24 in die optische Umlenkeinheit 16 einkoppelt. Die Zielmarkierung 86 trifft zusammen mit dem Abbildungsstrahl 88 auf der vierten Oberfläche 46 auf und wird dort aufgrund der Beschichtung 38 reflektiert, wobei hierbei ein Einstrahlwinkel gleich einem Reflexionswinkel ist. Die an der vierten Oberfläche 46 reflektierte Zielmarkierung 86 und der Abbildungsstrahl 88 werden an der vierten Oberfläche 46 in Richtung der dritten Oberfläche 44 reflektiert und von dieser ebenfalls aufgrund der Beschichtung 36 reflektiert und in Richtung der Zerstreuungslinse 30 umgelenkt. Durch die Zerstreuungslinse 30 treten die beiden Strahlen für einen Bediener sichtbar aus, wobei auf der Netzhaut des Bedieners ein scharfes Bild des Messobjekts 64 und der Referenzmarkierung mittels der Zerstreuungslinse 30 erzeugt wird. Mittels der Sammellinse 24 und der Zerstreuungslinse 30 zusammen mit den beiden als Flachspiegel ausgebildeten spiegelnden Fläche 50, 52 kann eine vergrößerte Abbildung nach dem Prinzip des Galilei-Teleskops erfolgen.

Die Zieloptikvorrichtung 10 ist zusammen mit der Strahlungsquelle 60 als eine Baugruppe ausgebildet, die in konstruktiv einfacher Weise und insbesondere weitere Montageschritte einsparend in das Laserentfernungsmessgerät während eines Herstellungsprozesses des Laserentfernungsmessgeräts eingebaut werden kann, wobei während eines Montageverfahrens zuerst die von dem Pentaprisma 20 gebildete Umlenkeinheit 16 zusammen mit den beiden optischen Linsenelementen 18, 28 durch Spritzgießen hergestellt und die Beschichtungen 32, 34, 36, 38 auf die Umlenkeinheit 16 und/oder das weitere optische Element 82 aufgebracht werden und anschließend die Umlenkeinheit 16 mit dem weiteren optischen Element 82 und/oder der Strahlungsquelle 60 zu einer Baueinheit 94 montiert wird. Hierbei erfolgt eine Justierung der Zieloptikvorrichtung 10, indem die optische Umlenkeinheit 16 und das weitere optische Element 82 und/oder die Strahlungsquelle 60 aufeinander abgestimmt werden. Anschließend wird die vormontierte und justierte Baueinheit 94 in das Entfernungsmessgerät 12 montiert.

In einer alternativen Ausgestaltung der Erfindung ist zudem eine Ausgestaltung der Zielmarkierung 86 in Form eines eingeblendeten Fadenkreuzes und/oder weiterer, dem Fachmann als sinnvoll erscheinender Zielmarkierungen 86 jederzeit denkbar.

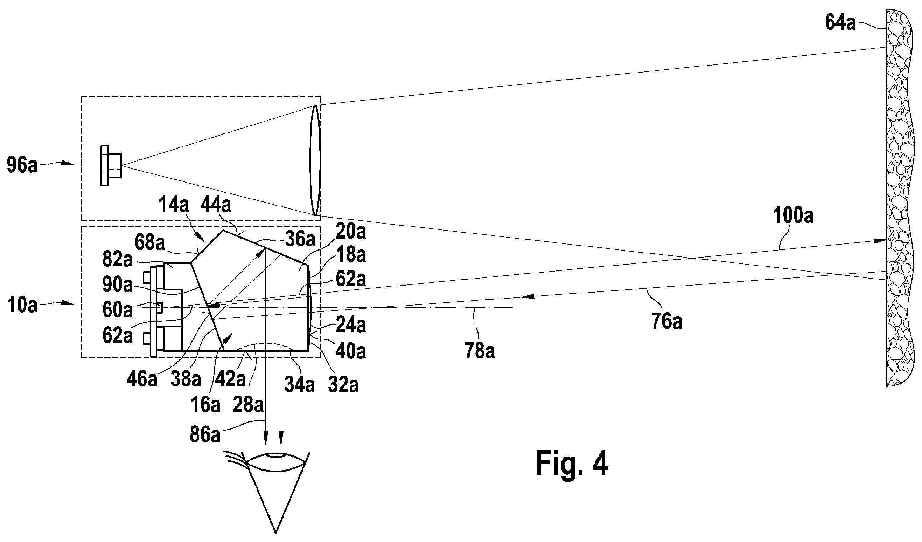

In Figur 4 ist eine zu den Figuren 2 und 3 alternative Ausgestaltung eines Entfernungsmessgeräts 12 dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele ist den Bezugszeichen des nachfolgenden Ausführungsbeispiels der Buchstabe a hinzugefügt. Die nachfolgende Beschreibung beschränkt sich im Wesentlichen auf die Unterschiede zu dem Ausführungsbeispiel in den Figuren 2 und 3, wobei bezüglich gleich bleibender Bauteile, Merkmale und Funktionen auf die Beschreibung des Ausführungsbeispiels in den Figuren 2 und 3 verwiesen werden kann.

Das von einem Laserentfernungsmessgerät gebildete Entfernungsmessgerät 12a nach Figur 4 weist gegenüber dem Laserentfernungsmessgerät aus den Figuren 2 und 3 nur eine einzige Strahlungsquelle 60a auf, die sowohl zur Erzeugung von Strahlung vorgesehen ist, die für eine Entfernungsmessung und zum Anvisieren eines Messobjekts 64a im Betrieb verwendet wird. Die Strahlungsquelle 60a wird hierbei von einer Laserdiode gebildet. Die Strahlung wird von einem Laserstrahl 62a gebildet, der sowohl die Funktion eines für eine Entfernungsmessung ausgebildeten Laserstrahls 100a als auch die Funktion einer Zielmarkierung 86a zum Anvisieren des Messobjekts 64a aufweist.

Die Zieloptikvorrichtung 10a gemäß Figur 4 weist eine von einem Pentaprisma 20a gebildete, optische Umlenkeinheit 16a auf, die zumindest eine von zumindest teilweise einer Transmissions-Reflexionsschicht 90a gebildete Beschichtung 38a aufweist. Diese Beschichtung 38a ist an einer der Strahlungsquelle 60a zugewandten, vierten Oberfläche 46a der optischen Umlenkeinheit 16a angeordnet. Durch diese Beschichtung 38a wird ein Anteil des Laserlichts herausgefiltert, so dass der Laserstrahl 62a mit verminderter Intensität in die optische Umlenkeinheit 16a eindringt. Diese verminderte Intensität des Laserstrahls 62a ermöglicht die Verwendung einer herkömmlichen Laserquelle als Strahlungsquelle 60a, ohne dass eine Gefährdung für den Bediener bei einer Betrachtung der Zielmarkierung 86a zu befürchten ist. Ein Anteil des Laserstrahls 62a, der entlang einer Achse 78a in Richtung eines von einer Sammellinse 24a gebildeten ersten optischen Linsenelements 18a verläuft, wird durch eine Beschichtung 32a auf einer ersten Oberfläche 40a der Umlenkeinheit 16a teilweise in Richtung der vierten Oberfläche 46a der optischen Umlenkeinheit 16a im Wesentlichen entlang der Achse 78a reflektiert, wobei die Beschichtung 32a sowohl eine Transmissionseigenschaft als auch eine Reflektionseigenschaft aufweist, so dass ein Teilstrahl des Laserstrahls 62a die Umlenkeinheit 16a durch die Sammellinse 24a verlässt und ein Teilstrahl des Laserstrahls 62a an der Beschichtung 32a reflektiert wird. Dieser reflektierte Anteil des Laserstrahls 62a wird als Zielmarkierung 86a und/oder Referenzmarkierung zum Anvisieren des Messobjekts 64a verwendet. Ein Anteil des Laserstrahls 62a, der durch die Sammellinse 24a die Umlenkeinheit 16a in Richtung des Messobjekts 64a verlässt, dient als für die Entfernungsmessung vorgesehener Laserstrahl 100a.

## Patentansprüche

1. Zieloptikvorrichtung für ein Entfernungsmessgerät (12; 12a), mit einer Optikeinheit (14; 14a), die zumindest eine optische Umlenkeinheit (16; 16a) und ein erstes optisches Linsenelement (18; 18a) aufweist, wobei die
optische Umlenkeinheit (16, 16a) und das erste optische Linsenelement (18; 18a) zumindest teilweise einstückig miteinander ausgebildet sind, **dadurch gekennzeichnet, dass** die
Optikeinheit (14; 14a) zumindest einen Hohlspiegel (26; 26a) bildet, der zumindest teilweise von dem ersten optischen Linsenelement (18; 18a) gebildet ist.

2. Zieloptikvorrichtung nach Anspruch 1, **dadurch gekennzeichnet, dass** die optische Umlenkeinheit (16; 16a) zumindest ein Prisma, insbesondere ein Pentaprisma (20; 20a), aufweist.

3. Zieloptikvorrichtung nach einem der vorhergehenden Ansprüche, **dadurch gekennzeichnet, dass** die optische Umlenkeinheit (16; 16a) zumindest teilweise von einem optischen Spritzgussbauteil (22; 22a) gebildet ist.

4. Zieloptikvorrichtung nach einem der vorhergehenden Ansprüche, **dadurch gekennzeichnet, dass** das erste optische Linsenelement (18; 18a) zumindest teilweise von einer Sammellinse (24; 24a) gebildet ist.

5. Zieloptikvorrichtung nach einem der vorhergehenden Ansprüche, **dadurch gekennzeichnet, dass** die Optikeinheit (14; 14a) zumindest ein zweites optisches Linsenelement (28; 28a) aufweist, das zumindest teilweise einstückig mit der optischen Umlenkeinheit (16; 16a) ausgebildet ist.

6. Zieloptikvorrichtung nach Anspruch 5, **dadurch gekennzeichnet, dass** das zweite optische Linsenelement (28; 28a) zumindest teilweise von einer Zerstreuungslinse (30; 30a) gebildet ist.

7. Zieloptikvorrichtung nach einem der vorhergehenden Ansprüche, **dadurch gekennzeichnet, dass** die Optikeinheit (14; 14a) zumindest eine Beschichtung (32, 34, 36, 38; 32a, 34a, 36a, 38a) aufweist, die an oder in zumindest einer Oberfläche (40, 42, 44, 46; 40a, 42a, 44a, 46a) der optischen Umlenkeinheit (16; 16a) angeordnet ist.

8. Zieloptikvorrichtung nach Anspruch 7, **dadurch gekennzeichnet, dass** die Beschichtung (32, 36, 38; 32a, 36a, 38a) zumindest teilweise eine spiegelnde Fläche (48, 50, 52; 48a, 50a, 52a) der optischen Umlenkeinheit (16; 16a) bildet.

9. Zieloptikvorrichtung nach einem der vorhergehenden Ansprüche, **dadurch gekennzeichnet, dass** die optische Umlenkeinheit (16) zumindest zwei spiegelnde Flächen (50, 52) aufweist, die einen Winkel von im Wesentlichen 45° zueinander einschließen.

10. Zieloptikvorrichtung nach einem der vorhergehenden Ansprüche, **gekennzeichnet durch** zumindest ein weiteres optisches Element (82; 82a), insbesondere ein Spritzgussbauteil, das zu einem Einkoppeln von Licht- und/oder Laserstrahlen (62; 62a) in die Umlenkeinheit (16; 16a) vorgesehen ist.

11. Zieloptikvorrichtung nach Anspruch 10, **gekennzeichnet dadurch, dass** zwischen der Umlenkeinheit (16; 16a) und dem weiteren optischen Element (82; 82a) zumindest teilweise eine Transmissions-Reflexionsschicht (90; 90a) angeordnet ist.

12. Zieloptikvorrichtung nach einem der vorhergehenden Ansprüche, **gekennzeichnet durch** zumindest eine Strahlungsquelle (60a) zur Erzeugung von Strahlung, die zur Entfernungsmessung und/oder zum Anvisieren eines Messobjekts (64a) vorgesehen ist.

13. Entfernungsmessgerät, insbesondere Laserentfernungsmessgerät, mit zumindest einer Zieloptikvorrichtung (10; 10a) nach einem der vorhergehenden Ansprüche.

14. Montageverfahren für ein Entfernungsmessgerät (12; 12a) nach Anspruch 13, **dadurch gekennzeichnet, dass** in einem ersten Schritt die optische Umlenkeinheit (16; 16a) zusammen mit dem ersten optischen Linsenelement (18, 18a) als eine einstückige Baueinheit hergestellt wird und diese Baueinheit (94; 94a) in die Zieloptikvorrichtung des Entfernungsmessgeräts (12; 12a) montiert wird.

## Claims

1. Sighting optics device for a rangefinder (12; 12a), with an optics unit (14; 14a) which has at least one optical deflection unit (16; 16a) and a first optical lens element (18; 18a), wherein the optical deflection unit (16; 16a) and the first optical lens element (18; 18a) at least in part have an integral design with one another, **characterized in that** the optics unit (14; 14a) forms at least one concave mirror (26; 26a) which is formed, at least in part, by the first optical lens element (18; 18a).

2. Sighting optics device according to Claim 1, **characterized in that** the optical deflection unit (16; 16a) has at least one prism, more particularly a pentaprism (20; 20a).

3. Sighting optics device according to one of the preceding claims, **characterized in that** the optical deflection unit (16; 16a) is formed, at least in part, by an optical injection molded component (22; 22a).

4. Sighting optics device according to one of the preceding claims, **characterized in that** the first optical lens element (18; 18a) is formed, at least in part, by a positive lens (24; 24a).

5. Sighting optics device according to one of the preceding claims, **characterized in that** the optics unit (14; 14a) has at least a second optical lens element (28; 28a) which, at least in part, has an integral design with the optical deflection unit (16; 16a).

6. Sighting optics device according to Claim 5, **characterized in that** the second optical lens element (28; 28a) is formed, at least in part, by a negative lens (30; 30a).

7. Sighting optics device according to one of the preceding claims, **characterized in that** the optics unit (14; 14a) has at least one coating (32, 34, 36, 38; 32a, 34a, 36a, 38a) which is arranged on or in at least one surface (40, 42, 44, 46; 40a, 42a, 44a, 46a) of the optical deflection unit (16; 16a).

8. Sighting optics device according to Claim 7, **characterized in that** the coating (32, 36, 38; 32a, 36a, 38a) at least in part forms a mirroring face (48, 50, 52; 48a, 50a, 52a) of the optical deflection unit (16; 16a).

9. Sighting optics device according to one of the preceding claims, **characterized in that** the optical deflection unit (16) has at least two mirroring faces (50, 52), which include an angle of substantially 45° with respect to one another.

10. Sighting optics device according to one of the preceding claims, **characterized by** at least one further optical element (82; 82a), more particularly an injection molded component, which is provided for coupling light and/or laser beams (62; 62a) into the deflection unit (16; 16a).

11. Sighting optics device according to Claim 10, **characterized in that** a transmission-reflection layer (90; 90a) is, at least in part, arranged between the deflection unit (16; 16a) and the further optical element (82; 82a).

12. Sighting optics device according to one of the preceding claims, **characterized by** at least one radiation source (60a) for generating radiation provided for measuring the distance to and/or aiming at a measurement object (64a).

13. Rangefinder, more particularly laser rangefinder, with at least one sighting optics device (10; 10a) according to one of the preceding claims.

14. Assembly method for a rangefinder (12; 12a) according to Claim 13, **characterized in that,** in a first step, the optical deflection unit (16; 16a) is produced as an integral component together with the first optical lens element (18, 18a) and this component (94; 94a) is assembled in the sighting optics device of the rangefinder (12; 12a).

## Revendications

1. Dispositif optique de visée pour un appareil de mesure de distance (12 ; 12a), comportant une unité optique (14 ; 14a) dotée d'au moins une unité de déviation optique (16 ; 16a) et d'un premier élément formant lentille optique (18 ; 18a), dans lequel l'unité de déviation optique (16, 16a) et le premier élément formant lentille optique (18 ; 18a) sont réalisés, au moins en partie, sous la forme d'un élément d'un seul tenant, **caractérisé en ce que** l'unité optique (14 ; 14a) forme au moins un miroir concave (26 ; 26a) qui est constitué, au moins en partie, par le premier élément formant lentille optique (18 ; 18a).

2. Dispositif optique de visée selon la revendication 1, **caractérisé en ce que** l'unité de déviation optique (16 ; 16a) comporte au moins un prisme, notamment un pentaprisme (20 ; 20a).

3. Dispositif optique de visée selon l'une quelconque des revendications précédentes, **caractérisé en ce que** l'unité de déviation optique (16 ; 16a) est constituée, au moins en partie, d'un composant optique moulé par injection (22 ; 22a).

4. Dispositif optique de visée selon l'une quelconque des revendications précédentes, **caractérisé en ce que** le premier élément formant lentille optique (18 ; 18a) est formé, au moins en partie, d'une lentille convergente (24 ; 24a).

5. Dispositif optique de visée selon l'une quelconque des revendications précédentes, **caractérisé en ce que** l'unité optique (14 ; 14a) comporte au moins un second élément formant lentille optique (28 ; 28a) qui est réalisé, au moins en partie, d'un seul tenant avec l'unité de déviation optique (16 ; 16a).

6. Dispositif optique de visée selon la revendication 5, **caractérisé en ce que** le second élément formant lentille optique (28 ; 28a) est constitué, au moins en partie, d'une lentille divergente (30 ; 30a).

7. Dispositif optique de visée selon l'une quelconque des revendications précédentes, **caractérisé en ce que** l'unité optique (14 ; 14a) comporte au moins un revêtement (32, 34, 36, 38 ; 32a, 34a, 36a, 38a) qui est disposé sur ou dans au moins une surface (40, 42, 44, 46 ; 40a, 42a, 44a, 46a) de l'unité de déviation optique (16 ; 16a).

8. Dispositif optique de visée selon la revendication 7, **caractérisé en ce que** le revêtement (32, 36, 38 ; 32a, 36a, 38a) forme, au moins en partie, une surface réfléchissante (48, 50, 52 ; 48a, 50a, 52a) de l'unité de déviation optique (16 ; 16a).

9. Dispositif optique de visée selon l'une quelconque des revendications précédentes, **caractérisé en ce que** l'unité de déviation optique (16) comporte au moins deux surfaces réfléchissantes (50, 52) qui forment entre elles un angle sensiblement égal à 45°.

10. Dispositif optique de visée selon l'une quelconque des revendications précédentes, **caractérisé par** au moins un autre élément optique (82 ; 82a), notamment un composant moulé par injection, qui est prévu pour un couplage en entrée de faisceaux lumineux et/ou laser (62 ; 62a) dans l'unité de déviation optique (16 ; 16a).

11. Dispositif optique de visée selon la revendication 10, **caractérisé en ce qu'**une couche de transmission-réflexion (90 ; 90a) est au moins partiellement disposée entre l'unité de déviation optique (16 ; 16a) et l'élément optique (82 ; 82a).

12. Dispositif optique de visée selon l'une quelconque des revendications précédentes, **caractérisé par** une source de rayonnement (60a) destinée à générer un rayonnement, qui est prévue pour mesurer une distance et/ou pour viser un objet de mesure (64a).

13. Appareil de mesure de distance, en particulier, appareil de mesure de distance à laser, comportant au moins un dispositif optique de visée (10 ; 10a) selon l'une quelconque des revendications précédentes.

14. Procédé de montage destiné à un appareil de mesure de distance (12 ; 12a) selon la revendication 13, **caractérisé en ce que**, lors d'une première étape, l'unité de déviation optique (16 ; 16a) est réalisée en association avec le premier élément formant lentille optique (18, 18a) sous la forme d'un ensemble d'un seul tenant et **en ce que** ledit ensemble (94 ; 94a) est monté dans le dispositif optique de visée de l'appareil de mesure de distance (12 ; 12a).
